# EUROPÄISCHE PATENTSCHRIFT

(11) **EP 2 014 501 B1**
(45) Veröffentlichungstag und Bekanntmachung des Hinweises auf die Patenterteilung: **06.01.2016**
(21) Anmeldenummer: 08011494.5
(22) Anmeldetag: 25.06.2008
(51) Int. Cl.: B60K 11/04

(54) **Frontendmodul für Fahrzeuge**
Frontend module for vehicles
Module avant pour véhicules

(30) Priorität: 13.07.2007 DE 102007033116
(43) Veröffentlichungstag der Anmeldung: 14.01.2009
(73) Patentinhaber: HBPO GmbH, 59552 Lippstadt (DE); MAHLE Behr GmbH & Co. KG, 70469 Stuttgart (DE)
(72) Erfinder: Haßdenteufel, Klaus, Dipl.-Ing., 70839 Gerlingen (DE); Höglinger, Markus, Dipl.-Ing., 70619 Stuttgart (DE); Opperbeck, Guido, Dipl.-Ing., 59558 Lippstadt (DE); Schöning, Ralf, Dipl.-Ing., 33442 Herzebrock-Clarholz (DE)
(74) Vertreter: Ostermann, Thomas

(56) Entgegenhaltungen:
- EP-A- 1 352 810
- WO-A-99/54187
- DE-A1- 19 831 256
- FR-A- 2 758 121

## Beschreibung

Die Erfindung betrifft ein Frontendmodul für Fahrzeuge mit einem Montageträger, der mehrere in unterschiedliche Richtungen verlaufende Abschnitte aufweist zur Aufnahme von Bauteilen des Fahrzeuges.

Aus der DE 102 48 440 A1 ist ein Aufsetzteil für eine Frontseite eines Fahrzeugs bekannt, das mit Befestigungsösen an Vorsprüngen eines Kühlmoduls des Fahrzeugs eingehängt wird. Das Aufsetzteil weist mehrere Durchbrechungen auf, so dass Frischluftleitkanäle gebildet sind zwischen dem frontseitigen Kühlergrill und Öffnungen des Stoßfängerüberzugs einerseits und dem Kühlmodul andererseits. Nachteilig an dem bekannten Aufsetzteil ist, dass es zur Abdichtung des Kühlmoduls in Bezug zu den benachbarten Bauteilen (Umfeldabdichtung) auf die Konfiguration des Kühlmoduls bzw. an die frontseitig angeordneten Bauteile des Fahrzeugs angepasst sein muss.

Aus der DE 10 2005 009 768 A1 ist ein Frontendmodul für Fahrzeuge mit einem Montageträger bekannt, dem eine Luftleiteinheit vorgelagert ist. Die Luftleiteinheit ist als ein Luftleitkasten ausgebildet, der an einem Querträger einer Stoßfängereinheit befestigt ist. Der Luftleitkasten weist einen umlaufenden Rahmen auf, dessen Rückseite an einer Fläche eines Montageträgers des Frontendmoduls anliegt. Eine Anpassung an die Konfiguration der Frontseite des Fahrzeugs ist daher erforderlich.

Aus der US 6 973 984 B2 ist ein Frontendmodul für Fahrzeuge mit einem Montageträger bekannt, der im Frontbereich eines Fahrzeugs an Karosserieteilen desselben montierbar ist und zur Aufnahme von Bauteilen, wie beispielsweise eines Kühlmoduls, dient. Das Kühlmodul ist in einem mittleren Bereich des Montageträgers an demselben befestigt. Zur Abdichtung des Kühlmoduls schließt sich unmittelbar an den Montageträger eine Luftleiteinheit an. Die Luftleiteinheit weist im Wesentlichen in vertikaler Richtung von einer Querstrebe des Montageträgers nach unten weisende Luftleitelemente auf, die eine ausreichende Steifigkeit aufweisen, um der von einer Motorhaube ausgeübten Kraft zu widerstehen. Zur Luftführung von einer Stoßfängereinheit zu dem Kühlmodul sind diese Luftleitelemente nicht geeignet.

Aus der DE 198 31 256 A1 ist eine Haltevorrichtung für Kühlmodule bekannt, die einen nach oben offenen U-förmigen Montageträger zur Aufnahme eines Kühlmoduls umfasst. Als Luftleitelement ist ein Luftleitrahmen aus einem elastischen, geschäumten Material vorgesehen, an dem das Kühlmodul formschlüssig gehalten ist. Der Luftleitrahmen wird zusammen mit dem Kühlmodul über entsprechende Nut-/Federverbindungen in die U-förmige Aufnahme des Montageträgers eingeführt und dann mittels einer zusätzlichen Befestigungsplatte an dem Montageträger arretiert. Das Kühlmodul ist somit nicht direkt über Befestigungsmittel mit dem Montageträger verbunden.

Aus der EP 1 352 810 A2 ist ein Frontendmodul für Fahrzeuge mit einem Montageträger bekannt, an dem in einem mittleren Bereich desselben ein Kühlmodul befestigt ist. Ferner schließt sich an dem Montageträger eine Luftleiteinheit mit plattenförmigen Luftleitelementen an, so dass eine Luftführung von einer Umgebung des Fahrzeugs in Richtung des Kühlmoduls gewährleistet ist. Die Luftleitelemente bestehen aus einem geschäumten Kunstharzmaterial.

Aufgabe der vorliegenden Erfindung ist es, ein Frontendmodul für Fahrzeuge derart weiterzubilden, dass auf kostengünstige Weise eine effektive Luftführung von einer Umgebung des Fahrzeugs in Richtung eines im Frontbereich desselben angeordneten Kühlmoduls gewährleistet ist.

Zur Lösung dieser Aufgabe weist die Erfindung die Merkmale des Patentanspruchs 1 auf.

Der besondere Vorteil der Erfindung besteht darin, dass durch Ausbildung einer Luftleiteinheit mittels mindestens einem Luftleitelement aus einem geschäumten Kernmaterial und einem geschäumten Oberflächenmaterial zum einen die Herstellungskosten und zum anderen das Gewicht der Luftleiteinheit verringert werden kann. Insbesondere durch die Gewichtseinsparung ergibt sich eine Effizienzsteigerung der Fahrzeugmotoren hinsichtlich des CO₂-Ausstoße Dadurch, dass die erfindungsgemäßen Luftleitelemente aus einem flexiblen geschäumten Material bestehen, weisen dieselbe eine Elastizität auf, so dass eine dichtende Anlage des Lichtleitelementes an einem angrenzenden Bauteil des Fahrzeugs gewährleistet ist. Hierdurch kann eine erhöhte Dichtfunktion erreicht werden. Auch beim formschlüssigen Ansetzen des Luftleitelementes an die angrenzenden Bauteile begünstigt die Flexibilität des Luftleitelementes die vereinfachte Montage.

Nach einer bevorzugten Ausführungsform der Erfindung erstrecken sich Luftleitelemente der Luftleiteinheit zur Bildung eines Luftleitkanals im Wesentlichen zwischen fahrzeugvorderseitigen Lufteinlässen und einem an dem Montageträger montierten Kühlmodul. Die Luftleitelemente bilden somit relativ großflächige Kanalwände und ermöglichten eine relativ große Gewichtseinsparung.

Nach einer Weiterbildung der Erfindung sind Luftleitelemente der Luftleiteinheit formschlüssig mit dem Montageträger verbunden. Vorteilhaft können die Luftleitelemente einfach an dem Montageträger vormontiert sein. Die endgültige Relativlage zu dem Montageträger ist somit vorgegeben. Im endmontierten Zustand des Frontendmoduls an dem Fahrzeug kann eine dem Montageträger abgewandte Seite des Luftleitelementes an einem in der Nähe liegenden Bauteil, beispielsweise an einem Wärmeüberträger des Kühlmoduls oder an einer Innenseite der Stoßfängereinheit, anliegen oder ebenfalls formschlüssig an denselben befestigt sein. Vorteilhaft kann hierdurch die Montage der Luftleiteinheit vereinfacht werden.

Nach einer bevorzugten Ausführungsform der Erfindung weist die Luftleiteinheit seitliche Luftleitelemente auf, die sich im Wesentlichen in vertikaler Richtung zwischen einer Erstreckungsebene des Kühlmoduls bzw. des Montageträgers einerseits und einer Erstreckungsebene der Stoßfängereinheit andererseits erstrecken. Hierdurch wird eine gezielte Luftführung von Frischluft aus der Umgebung in Richtung des Kühlmoduls gewährleistet. Aufgrund der Nachgiebigkeit des Luftleitelementmaterials können Fertigungstoleranzen der Stoßfängereinheit zu dem Montageträger bzw. Kühlmodul ausgeglichen werden.

Die Ausgestaltung der Luftleitelemente aus einem geschäumten Material ermöglicht eine Vielzahl von Befestigungsmöglichkeiten. Beispielsweise kann das Luftleitelement durch Einpressen oder Klammern oder Einknöpfen oder Aufstecken mit dem angrenzenden Bauteil verbunden sein.

Nach einer bevorzugten Ausführungsform der Erfindung ist ein seitliches Luftleitelement der Luftleiteinheit segmentiert ausgebildet und weist zum einen ein hinteres Luftleitsegment und zum anderen ein vorderes Luftleitsegment auf, die jeweils formschlüssig mit dem Montageträger bzw. einem Stoßfängerüberzug der Stoßfängereinheit verbunden sind. Das hintere Luftleitsegment und das vordere Luftleitsegment bilden aufgrund einer auf der zueinander gekehrten Seite angeordneten flächigen Anlage von Längsseiten derselben eine dichte Luftkanalwand. Vorteilhaft kann auf das Vorsehen von Befestigungsmitteln zur Befestigung des hinteren Luftleitsegmentes mit dem vorderen Luftleitsegment verzichtet werden.

Nach einer Weiterbildung der Erfindung ist das seitliche Luftleitelement mit einer Feder-Nut-Verbindung mit dem Stoßfängerüberzug und/oder mit dem Montageträger verbunden. Alternativ kann das Luftleitelement durch Einpressen oder Klammern oder Einknöpfen oder Aufstecken mit dem angrenzenden Bauteil verbunden sein.

Nach einer Weiterbildung der Erfindung weist die Luftleiteinheit ein schräges Luftleitelement auf, das sich zwischen einer Querstrebe des Montageträgers und einer Oberseite eines Wärmeübertragers des Kühlmoduls erstreckt. Eine dem Montageträger zugewandter Endbereich des schrägen Luftleitelementes kann eine Durchgangsöffnung aufweisen, in die ein seitlich abragender Befestigungsdorn des Montageträgers formschlüssig eingreift. Vorteilhaft kann hierdurch eine einfache Befestigung des schrägen Luftleitelementes an dem Montageträger erfolgen.

Vorteilhaft ist das schräge Luftleitelement derart geformt, dass eine untere Schmalseite desselben auf einer oberen Schmalseite eines Wärmeübertragers des Kühlmoduls zur Anlage kommt. Das schräge Luftleitelement ermöglicht somit eine Umfeldabdichtung des Kühlmoduls an einer Oberseite desselben.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Vorderansicht eines Frontendmoduls mit einem Montageträger, an dem ein Kühlmodul und eine Stoßfängereinheit befestigt sind,
- Figur 2: eine perspektivische Vorderansicht des Frontendmoduls entsprechend Figur 1, wobei ein Stoßfängerüberzug der Stoßfängereinheit nicht dargestellt ist,
- Figur 3: einen Horizontalschnitt durch das Frontendmodul, wobei sich randseitig des Kühlmoduls zwischen dem Montageträger und dem Stoßfängerüberzug erstreckende seitliche Luftleitelemente einer Luftleiteinheit nach einer ersten Ausführungsform dargestellt sind,
- Figur 4: eine vergrößerte Darstellung einer Einzelheit X gemäß Figur 3,
- Figur 5: einen Vertikalschnitt durch einen Frontabschnitt des Fahrzeugs gemäß Figur 1 im Bereich eines seitlichen Luftleitelementes,
- Figur 6: einen Vertikalschnitt durch den Frontabschnitt des Fahrzeugs gemäß Figur 1 in einem mittleren Bereich des Frontendmoduls, in dem das Kühlmodul angeordnet ist und in dem sich ein schräges Luftleitelement der Luftleiteinheit zwischen einer Querstrebe des Montageträgers und einer Oberseite des Kühlmoduls erstreckt,
- Figur 7: eine vergrößerte Darstellung der Anbindung des abgeschrägten Luftleitelementes gemäß Figur 6 und
- Figur 8: einen teilweisen Horizontalschnitt durch einen Frontabschnitt des Fahrzeugs im Bereich eines Randbereichs des Kühlmoduls, in dem sich ein einstückiges Luftleitelement zwischen dem Montageträger und dem Stoßfängerüberzug erstreckt.

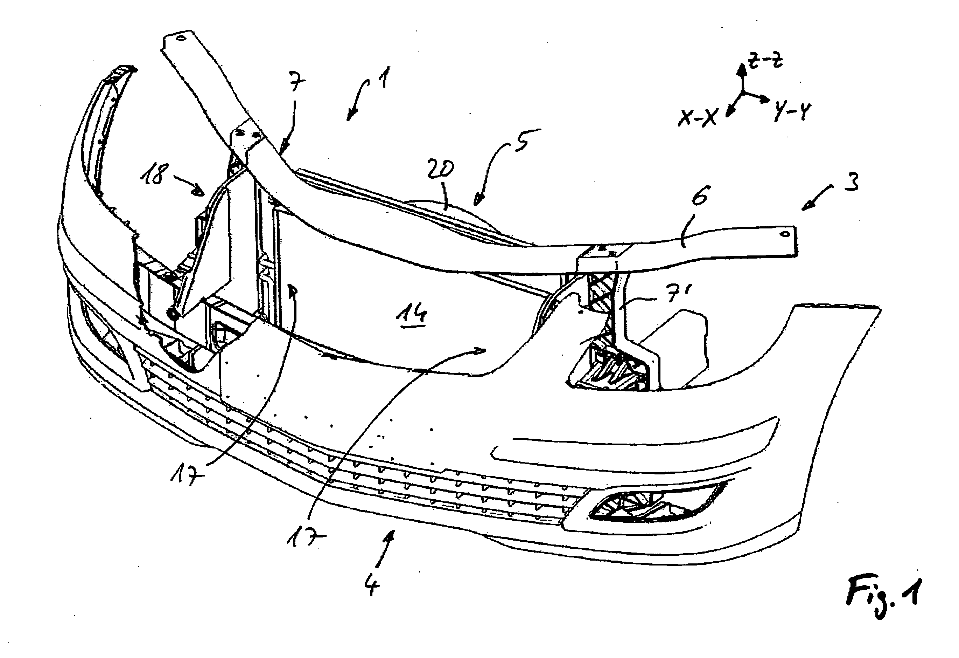

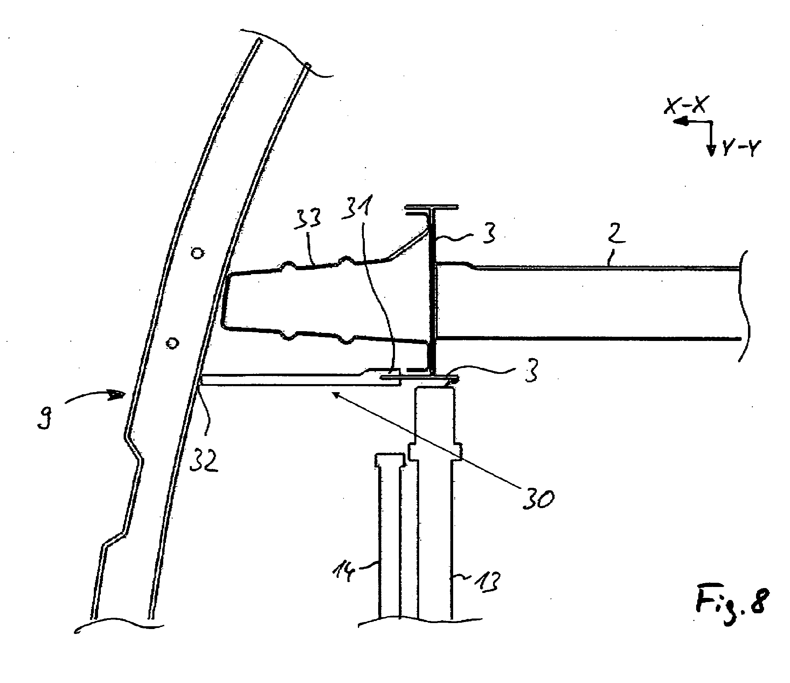

Ein Frontendmodul 1 für Fahrzeuge ist an einer Vorderseite eines Fahrzeugs über geeignete Befestigungsmittel an einem Strukturbauteil, beispielsweise an einem Längsträger 2, der Fahrzeugkarosserie befestigt, siehe Figur 8. Das Frontendmodul 1 erstreckt sich im Wesentlichen über die gesamte Breite des Fahrzeugs und weist einen Montageträger 3 auf, der zur Aufnahme von Bauteilen des Fahrzeugs, nämlich einer Stoßfängereinheit 4, eines Kühlmoduls 5 und nicht dargestellter Scheinwerfer geeignet ist, siehe Figur 1.

Der Montageträger 3 weist zur Aufnahme der Bauteile in unterschiedliche Richtungen verlaufende Abschnitte auf, die beispielsweise als ein im Wesentlichen in horizontaler Richtung verlaufender Querabschnitt 6 (Querstrebe) und zwei in Abstand zueinander verlaufende Vertikalabschnitte 7, 7' (Vertikalstrebe) ausgebildet sind. Die Vertikalstreben 7, 7' sind jeweils einstückig mit dem Querabschnitt 6 verbunden und ragen von einer Unterseite des Querabschnitts 6 in vertikaler Richtung nach unten ab. Gegebenfalls können die Vertikalabschnitte 7, 7' in einem unteren Endbereich über einen Verbindungsabschnitt miteinander verbunden sein, der parallel zu dem Querabschnitt 6 verläuft.

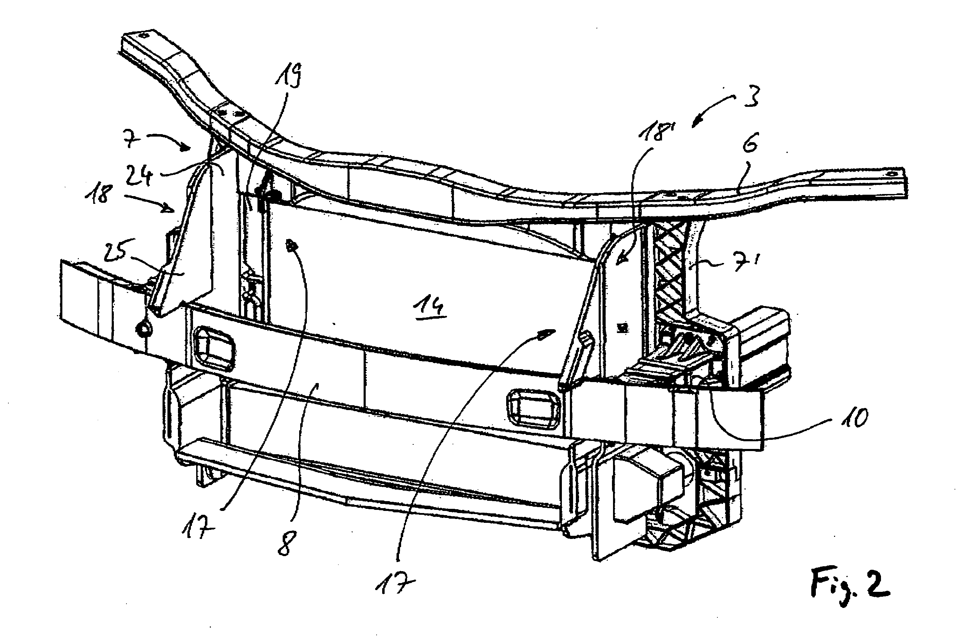

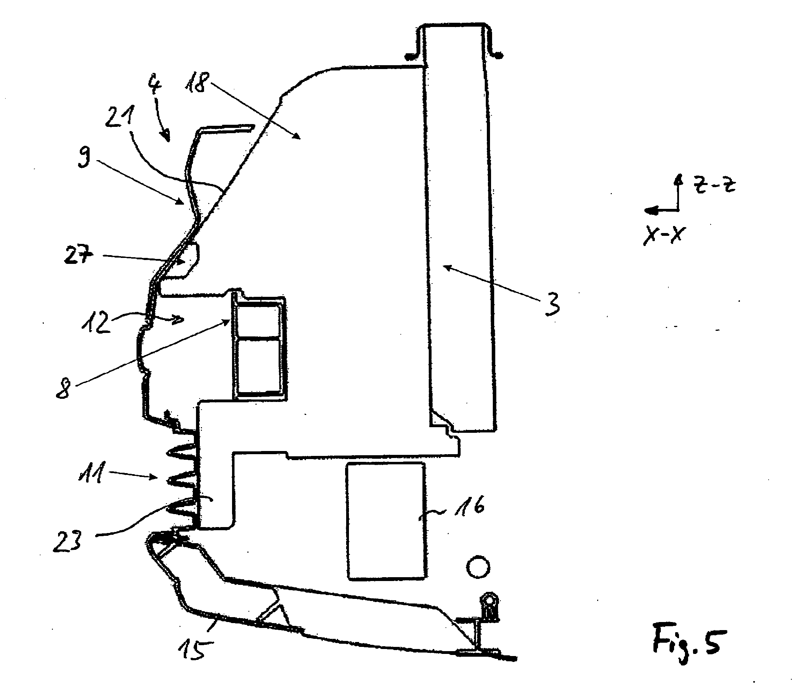

Wie insbesondere aus Figur 5 ersichtlich ist, weist die Stoßfängereinheit 4 im Wesentlichen einen Biegequerträger 8 sowie einen Stoßfängerüberzug 9 auf. Der Stoßfängerüberzug 9 erstreckt sich als Verkleidung quer zur Fahrtrichtung F des Fahrzeugs und ist beabstandet zu einem unteren Bereich des Montageträgers 3. Wie aus Figur 2 zu ersehen ist, ist der Biegequerträger 8 der Stoßfängereinheit 4 über eine Befestigungsstrebe 10 an den Vertikalabschnitten 7, 7' befestigt. Der Stoßfängerüberzug 9 weist in einem unteren Bereich Lufteinlässe 11 auf, durch die Frischluft aus der Umgebung des Fahrzeugs entgegen der Fahrtrichtung F (X-Richtung) in Richtung des Kühlmoduls 5 strömen kann. Oberhalb der Stoßfängereinheit 4 ist eine Aussparung 12 zur Aufnahme eines nicht dargestellten Kühlergitters vorgesehen, so dass Frischluft aus der Umgebung in einem im Vergleich zu den Lufteinlässen 11 der Stoßfängereinheit 4 oberen Bereich in Richtung des Kühlmoduls 5 strömen kann.

Das Kühlmodul 5 weist eine Mehrzahl von Wärmeübertragern auf, wobei sich ein plattenförmiger Wasserkühler 13 und ein in Fahrtrichtung F vor demselben angeordneter plattenförmiger Kondensator 14 in einem mittleren Bereich des Montageträgers 3 zwischen dem Querabschnitt 6 und einer Bodenschürze 15 der Frontseite des Fahrzeugs erstrecken. In Fahrtrichtung F hinter dem Wasserkühler 13 ist in üblicher Weise ein Lüfter 20 angeordnet. In Fahrtrichtung F vor dem Kondensator 14 ist in einem unteren Bereich ein Ladeluftkühler 16 angeordnet. Diese Wärmeübertrager des Kühlmoduls sind über geeignete Festigungsmittel mit dem Montageträger 3 verbunden.

Eine Luftleiteinheit 17 dient zum einen zur Luftführung von den Lufteinlässe 11 der Stoßfängereinheit 4 und dem Kühlergitter in Richtung des Kühlmoduls 5. Zum anderen dient die Luftleiteinheit 17 zur Umfeldabdichtung des Kühlmoduls 5 in Relation zu umgebenden Bauteilen, wie insbesondere des Montageträgers 3. Auf diese weise wird eine Abdichtung zwischen dem in Fahrtrichtung F hinter dem Kühlmodul 5 angeordneten Motorraum enthaltend relativ warme Luft und dem in Fahrtrichtung F vor dem Kühlmodul 5 angeordneten Vorraum geschaffen, in dem die Frischluft auf das Kühlmodul 5 trifft.

Die Luftleiteinheit 17 weist eine Mehrzahl von Luftleitelementen auf, die aus einem geschäumten Material bestehen. Vorzugsweise bestehen die Luftleitelemente aus einem geschäumten Kunststoffmaterial, das nachgiebig (flexibel) ausgebildet ist. Beispielsweise kann das geschäumte Material der Luftleitelemente aus einem EPP-Kunststoffmaterial oder aus PU-Kunststoffmaterial bestehen. Vorzugsweise sind die Luftleitelemente als Luftleitplatten ausgebildet, so dass sie einfach zwischen zwei beabstandet zueinander angeordneten Bauteilen der Vorderseite des Fahrzeugs positioniert werden können.

Die Luftleiteinheit 17 weist zwei seitliche Luftleitelemente 18, 18' auf, die sich jeweils zwischen den Vertikalabschnitt 7 bzw. 7' des Montageträgers 3 und einer vorderen Fahrzeugaußenhaut, insbesondere des Stoßfängerüberzuges 9 erstrecken. Die Luftleitelemente 18, 18' erstrecken sich jeweils in vertikaler Richtung (Z-Richtung) und bilden eine Verbindungswand zwischen einem vertikalen Rand 19 des Kühlmoduls 5 und der vorderen Fahrzeugaußenhaut. Dabei erstreckt sich das Luftleitelement 18, 18' über die gesamte Höhe (in Z-Richtung) des Kühlmoduls 5, wie aus Figur 1 in Verbindung mit Figur 5 ersichtlich ist. Wie aus Figur 5 ersichtlich ist, weist eine vordere Schmalseite 21 des Luftleitelementes 18, 18' eine Aussparung 22 im Bereich des Biegequerträgers 8 auf, wobei ein unterer Fortsatz 23 des Luftleitelementes 18, 18' bis in einen unteren Endbereich der Lufteinlässe 11 reicht.

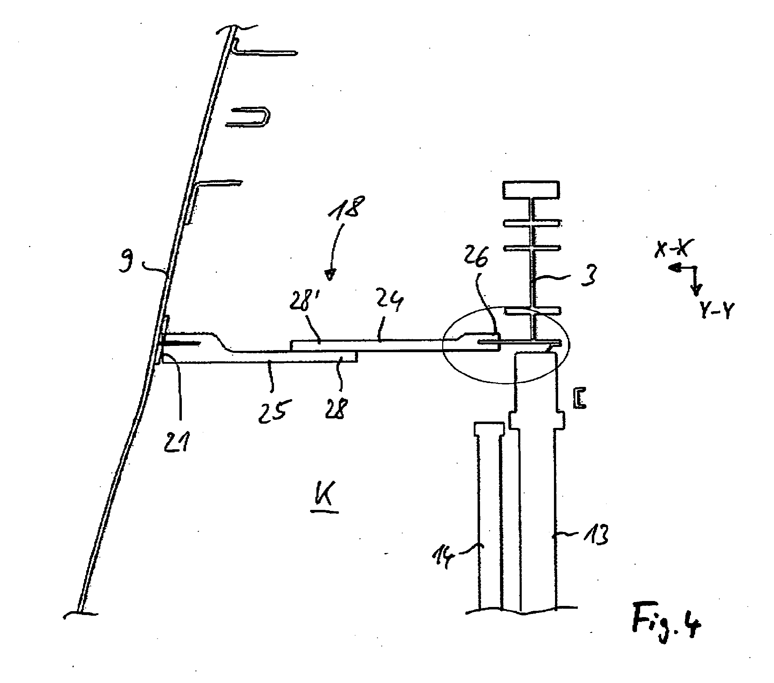

Wie besser aus Figur 4 ersichtlich ist, ist das Luftleitelement 18, 18' unter Bildung eines hinteren Luftleitsegmentes 24 und eines vorderen Luftleitsegmentes 25 segmentiert ausgebildet. Das hintere Luftleitsegment 24 ist an einer hinteren Schmalseite 26 desselben über eine Nut-Feder-Verbindung formschlüssig mit dem Montageträger 3 verbunden. Das vordere Luftleitsegment 25 ist an der vorderen Schmalseite 21 über eine Nut-Feder-Verbindung formschlüssig mit dem Stoßfängerüberzug 9 verbunden. Die Anbindung des vorderen Luftleitsegmentes 25 an den stoßfängerüberzug 9 kann in einem Befestigungsbereich 27 angeordnet sein, der sich oberhalb des Querträgers 8 befindet. Vorzugsweise ist das hintere Luftleitsegment 24 über die gesamte Länge der hinteren Schmalseite 26 formschlüssig mit dem Montageträger 3 verbunden, so dass eine sichere Verbindung hergestellt ist. Im Montagezustand des Luftleitelementes 18, 18' liegen freie Endbereiche des hinterren Luftleitsegmentes 24 und des vorderen Luftleitsegmentes 25 mit Längsseiten 28, 28' flächig aneinander, so dass eine sichere Begrenzung eines Luftleitkanals K zwischen der vorderen Fahrzeugaußenhaut und dem Kühlmodul 5 gewährleistet ist. Die Länge des hinteren Luftleitsegmentes 24 und des vorderen Luftleitsegmentes 25 in X-Richtung ist derart größer als der Abstand zwischen der vorderen Fahrzeugaußenhaut und dem Kühlmodul 5 gewählt, dass sich das hintere Luftleitsegment 24 und das vordere Luftleitsegment 25 überlappen. Die Steifigkeit der Luftleitsegmente 24, 25 ist derart gewählt, dass ein unerwünschtes Verbiegen durch den Frischluftstrom nicht erfolgen kann.

Nach einer alternativen Ausführungsform einer Luftleiteinheit 17 gemäß Figur 8 kann ein seitliches Luftleitelement 30 auch einstückig ausgebildet sein, wobei eine hintere Schmalseite 31 des Luftleitelementes 30 - wie das hintere Luftleitsegment 24 - formschlüssig mit dem Montageträger 3 und eine vordere Schmalseite 32 des Luftleitelements 30 stumpf an einer Innenseite der vorderen Fahrzeugaußenhaut (Stoßfängerüberzug 9) anliegt. Die Steifigkeit des seitlichen Luftleitelementes 30 ist derart gewählt, dass keine unerwünschte Verbiegung bzw. Verknickung desselben eintreten kann. Vorteilhaft kann das seitliche Luftleitelement 30 an dem Frontendmodul 1 vormontiert sein. Aufgrund der Nachgiebigkeit des seitlichen Luftleitelementes 30 können Maß- und Formtoleranzen der vorderen Fahrzeugaußenhaut in Relation zu dem Montageträger 3 ausgeglichen werden. Vorteilhaft ergibt sich hierdurch eine vereinfachte Montage.

Durch die Elastizität der Luftleitelemente 18, 18', 30 kann ein direkter Kontakt zu angrenzenden Bauteilen gewährleistet sein, so dass damit die Dichtfunktion erhöht wird. Darüber hinaus kann die Befestigung an angrenzenden Bauteilen einfach durch Aufstecken bzw. "Aufclipsen" oder Einpressen oder Verklammern oder Einknöpfen oder durch großflächiges Aufstecken mittels einer "Tannenbaumstruktur" erfolgen.

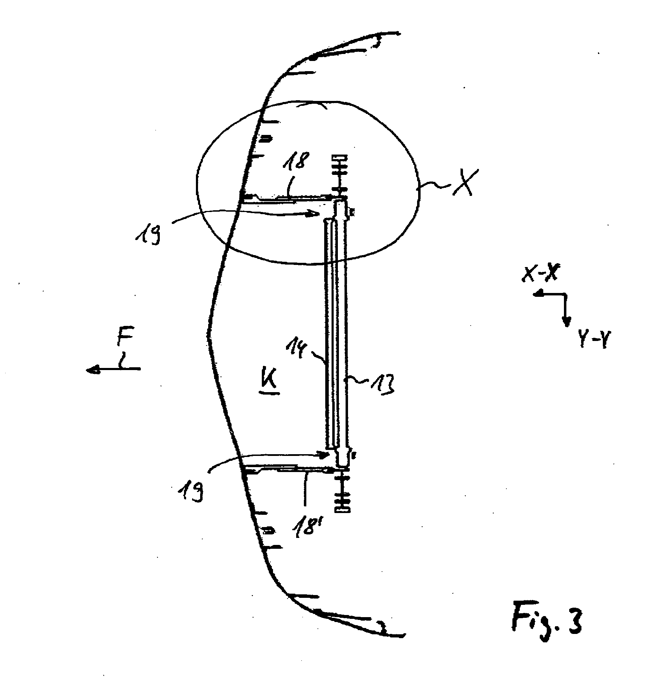

Wie aus Figur 8 ersichtlich ist, kann auf einer dem Kühlmodul 5 abgewandten Seite des seitlichen Luftleitelementes 30 ein Aufprallelement 33 (Crashbox) für den Fußgängerschutz angeordnet sein, das an einer Vorderseite des Montageträgers 3 befestigt ist. Rückseitig des Aufprallelementes 33 ist der Längsträger 2 der Fahrzeugkarosserie an dem Montageträger 3 befestigt. Der Einfachheit halber ist in den Figuren 3 und 4 das Aufprallelement 33 und der Längsträger 2 nicht dargestellt.

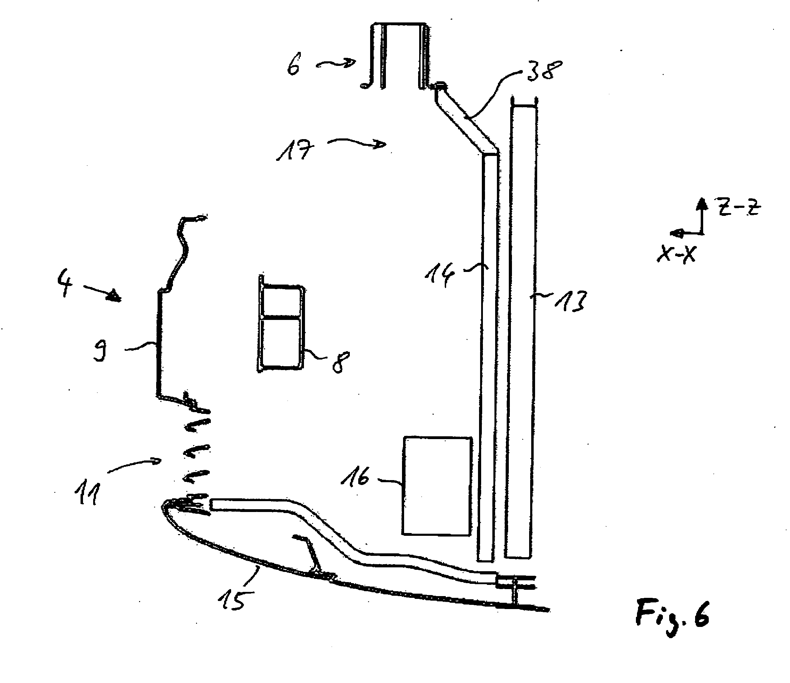

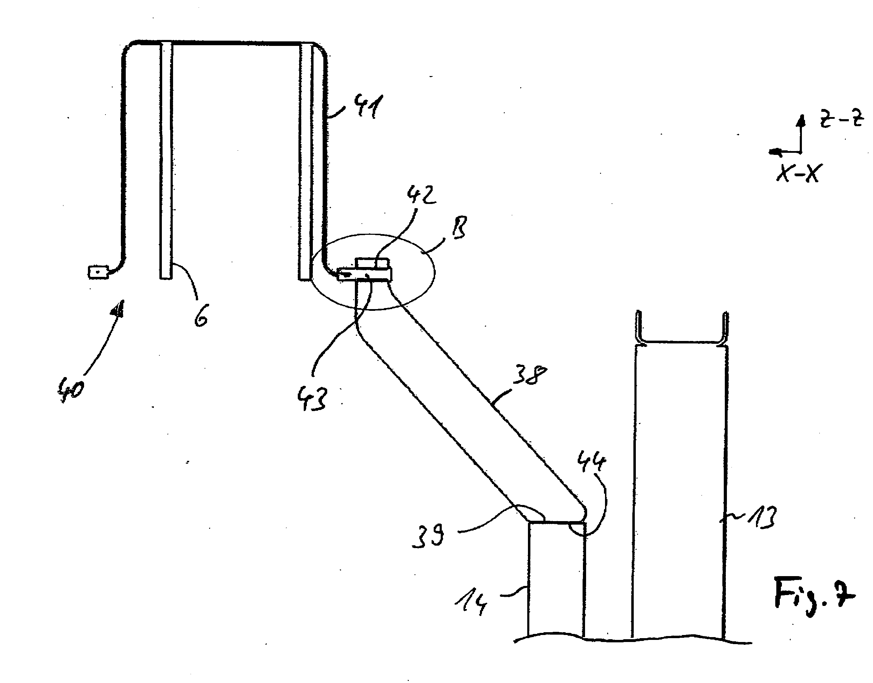

Wie insbesondere aus den Figuren 6 und 7 ersichtlich ist, weist die Luftleiteinheit 17 ein schräges Luftleitelement 38 auf, das zur Abdichtung des Kühlmoduls 5 in Relation zu dem Montageträger 3 dient. Zu diesem Zweck erstreckt sich das schräge Luftleitelement 38 geneigt um einen Winkel von ca. 45° zwischen dem Querabschnitt 6 des Montageträgers 3 und einer Oberseite 39 des Kondensators 14. Der Neigungswinkel des Luftleitelementes 38 ist abhängig von der Relativlage des Kondensators 14 zu dem Querabschnitt 6 des Montageträgers 3. Das Luftleitelement 38 kann auch vertikal angeordnet sein. Es dient zur Abdichtung in einem Bereich oberhalb des Kühlmoduls 5. Die Befestigung des schrägen Luftleitelementes 38 an dem Querabschnitt 6 erfolgt im Bereich einer Schlossbrücke 40 zur Befestigung einer nicht dargestellten Motorhaube an dem Querabschnitt 6. zu diesem Zweck ist ein U-förmiges Profil 41 bestehend aus einem Metallwerkstoff unter Anlage des Scheitels an dem Querabschnitt 6 an dem Montageträger 3 befestigt. Das schräge Luftleitelement 38 weist auf einer dem Querabschnitt 6 des Montageträgers 3 zugewandten Seite in einem Befestigungsbereich B eine Durchgangsöffnung 42 auf, in die ein Befestigungsdorn 43 eines freien Endes des Schenkels des U-förmigen Profils 41 formschlüssig eingreifen kann. Eine dem Montageträger 3 abgewandte untere Schmalseite 44 des Luftleitelementes 38 liegt flächig auf der oberen Schmalseite 39 des Kondensators 14 an. Vorteilhaft kann das Luftleitelement 38 an dem Montageträger 3 vormontiert sein, wobei aufgrund der Kompressibilität des Luftleitelementes 38 eine Anpassung an die Kontur des Kondensators 14 des Kühlmoduls 5 erfolgen kann.

Die Luftleitelemente sind jeweils durch zwei Materialkomponenten gebildet, einem ersten geschäumten Kernmaterial und einem zweiten geschäumten Oberflächenmaterial.

Vorteilhaft kann hierdurch bei direktem Kontakt mit angrenzenden Bauteilen eine höhere Oberflächentemperatur gewährleistet sein.

## Patentansprüche

1. Frontendmodul für Fahrzeuge mit einem Montageträger (3), der mehrere in unterschiedliche Richtungen verlaufende Abschnitte aufweist zur Aufnahme von Bauteilen des Fahrzeugs, wobei ein als Kühlmodul (5) ausgebildetes Bauteil in einem mittleren Bereich des Montageträgers (3) über Befestigungsmittel mit dem Montageträger (3) verbunden ist, das sich an dem Montageträger eine Luftleiteinheit (17) anschließt, die eine Mehrzahl von flexibel ausgebildeten Luftleitelementen (18, 18', 30, 38) bestehend aus einem ersten geschäumten Kernmaterial und einem zweiten geschäumten Oberflächenmaterial aufweist.

2. Frontendmodul nach Anspruch 1, **dadurch gekennzeichnet, dass** mehrere Luftleitelemente (18, 18', 30, 38) derart angeordnet sind, dass ein Luftleitkanal (K) gebildet ist zwischen fahrzeugvorderseitigen Lufteinlässen (11, 12) und dem in Fahrtrichtung (F) nachgelagerten Kühlmodul (5).

3. Frontendmodul nach Anspruch 1 oder 2, **dadurch gekennzeichnet, dass** die Luftleiteinheit (17) durch mehrere, das Kühlmodul (5) rahmenartig umgebende Luftleitelemente (18, 18', 30, 38) gebildet ist, die jeweils formschlüssig mit dem Montageträger (3) verbunden sind.

4. Frontendmodul nach einem der Ansprüche 1 bis 3, dadurch **gekennzeichet, dass** die Luftleiteinheit (17) mindestens ein seitliches Luftleitelement (18, 18', 30) aufweist, das sich zumindest im Bereich eines vertikalen Randes (19) des Kühlmoduls (5) zwischen einer Erstreckungsebene des Montageträgers (3) und/oder des Kühlmoduls (5) einerseits und einer in Fahrtrichtung (F) demselben vorgelagerten Fahrzeugaußenhaut andererseits erstreckt.

5. Frontendmodul nach einem der Ansprüche 1 bis 4, **dadurch gekennzeichnet, dass** sich das seitliche Luftleitelement (18, 18', 30) in vertikaler Richtung erstreckt und zum einen mit einer hinteren Schmalseite (26) formschlüssig an dem Montageträger (3) und zum anderen mit einer vorderen Schmalseite (21) formschlüssig oder stumpf anliegend an einem Stoßfängerüberzug (9) der Stoßfängereinheit (4) gehalten ist.

6. Frontendmodul nach einem der Ansprüche 1 bis 5, **dadurch gekennzeichnet, dass** die vordere Schmalseite (21) des seitlichen Luftleitelementes (18, 18', 30) an die vertikale Kontur der Stoßfängereinheit (4) gangepasst ist und dass das seitliche Luftleitelement (18, 18', 30) eine Aussparung (22) im Bereich eines Biegequerträgers (8) der Stoßfängereinheit (4) aufweist.

7. Frontendmodul nach einem der Ansprüche 1 bis 6, **dadurch gekennzeichnet, dass** das seitliche Luftleitelement (30) einstückig ausgebildet ist.

8. Frontendmodul nach einem der Ansprüche 1 bis 6, **dadurch gekennzeichnet, dass** das seitliche Luftleitelement (18, 18') segmentiert ausgebildet ist, wobei ein hinteres Luftleitsegment (24) formschlüssig mit dem Montageträger (3) und ein vorderes Luftleitsegment (25) formschlüssig mit dem Stoßfängerüberzug (9) der Stoßfängereinheit (4) verbunden ist und wobei das hintere Luftleitsegment (24) und das vordere Luftleitsegment (25) auf einer zueinandergekehrten Seite mit Längsseiten (28, 28') überlappend aneinanderliegen.

9. Frontendmodul nach einem der Ansprüche 1 bis 8, **dadurch gekennzeichnet, dass** das seitliche Luftleitelement (18, 18', 30) mittels einer Feder-Nut-Verbindung mit dem Stoßfängerüberzug (9) und/oder mit dem Montageträger (3) verbunden ist.

10. Frontendmodul nach einem der Ansprüche 1 bis 9, **dadurch gekennzeichnet, dass** die Luftleiteinheit (17) ein Luftleitelement (38) umfasst, das sich zwischen einem Querabschnitt (6) des Montageträgers (3) und einer Oberseite (39) eines Wärmeübertragers (14) des Kühlmoduls (5) erstreckt.

11. Frontendmodul nach Anspruch 10, **dadurch gekennzeichnet, dass** das Luftleitelement (38) auf einer dem Querabschnitt (6) des Montageträgers (3) zugewandten Seite eine Durchgangsöffnung (42) aufweist, in der ein seitlich von dem Querabschnitt (6) des Montageträgers (3) abragender Befestigungsdorn (43) formschlüssig gehalten ist.

12. Frontendmodul nach Anspruch 10 oder 11, **dadurch gekennzeichnet, dass** das Luftleitelement (38) auf einer dem Querabschnitt (6) des Montageträgers (3) abgewandten Seite mit einer unteren Schmalseite (44) flächig an der oberen Schmalseite (39) des Wärmeübertragers (14) des Kühlmoduls (5) anliegt.

13. Frontendmodul nach einem der Ansprüche 1 bis 12, **dadurch gekennzeichnet, dass** das Luftleitelement (18, 18', 30, 38) als eine Luftleitplatte ausgebildet ist.

14. Frontendmodul nach einem der Ansprüche 1 bis 13, **dadurch gekennzeichnet, dass** das geschäumte Material ein Kunststoffmaterial ist.

15. Frontendmodul nach einem der Ansprüche 1 bis 14, **dadurch gekennzeichnet, dass** das geschäumte Material als ein EPP-Kunststoffmaterial oder als ein PU-Kunststoffmaterial ausgebildet ist.

## Claims

1. A frontend module for vehicles which comprises a mounting member (3) containing a plurality of sections extending in different directions to accommodate vehicle components, wherein a component provided as a cooling module (5) is, by means of fixing elements, secured to said mounting member (3) in a central area thereof, wherein an air guide unit (17) is disposed adjacent to said mounting member, said air guide unit being provided with a plurality of flexible air guide elements (18, 18', 30, 38) made of a first foamed core material and a second foamed surface material.

2. The frontend module according to Claim 1, **characterized in that** a plurality of air guide elements (18, 18, 30, 38) are arranged to form an air guide channel (K) between front-end air inlets (11,12) and a cooling module (5) disposed at the rear thereof, as viewed in the vehicle travel direction (F).

3. The frontend module according to Claim 1 or 2, **characterized in that** the air guide unit (17) includes a plurality of air guide elements (18, 18', 30, 38) which are arranged to surround the cooling module (5) like a frame and which are each positively connected to the mounting member (3).

4. The frontend module according to any one of Claims 1 to 3, **characterized in that** the air guide element (17) comprises at least one lateral air guide element (18, 18, 30) which extends between an extension plane of the mounting member (3) and/or the cooling module (5) on the one hand, and a vehicle body shell arranged in front thereof as viewed in the travel direction (F) on the other hand, at least in the area of a vertical margin (19) of the cooling module (5).

5. The frontend module according to any one of Claims 1 to 4, **characterized in that** the lateral air guide element (18, 18', 30) extends in a vertical direction and is, by its rear narrow side (26), positively connected to the mounting member (3), on the one hand, and by its forward narrow side (21) positively joined with or abutted against the cover (9) of the bumper unit (4) on the other hand.

6. The frontend module according to any one of Claims 1 to 5, **characterized in that** the forward narrow side (21) of the lateral air guide element (18, 18', 30) is adapted to the vertical contour of the bumper unit (4) and that said lateral air guide element (18,18', 30) is provided with a recess (22) in the area of a bracket (8) of the bumper unit (4).

7. The frontend module according to any one of Claims 1 to 6, **characterized in that** the lateral air guide element (30) is a one-piece member.

8. The frontend module according to any one of Claims 1 to 6, **characterized in that** the lateral air guide element (18, 18') is segmented, wherein a rear air guide segment (24) is positively connected to the mounting member (3) and a forward air guide segment (25) is positively connected to a cover (9) of the bumper unit (4) and wherein the rear air guide segment (24) and the forward air guide segment (25) overlap with each other in opposing longitudinal sides (28, 28) in a facing and mating relationship.

9. The frontend module according to any one of Claims 1 to 8, **characterized in that** the lateral air guide element (18, 18', 30) is connected to the bumper cover (9) and/or to the mounting member (3) by tongue and groove.

10. The frontend module according to any one of Claims 1 to 9, **characterized in that** the air guide element (17) comprises an air guide element (38) which extends between a transversal section (6) of the mounting member (3) and the top (39) of a heat exchanger (14) of the cooling module (5).

11. The frontend module according to Claim 10, **characterised in that** on a side facing the transversal section (6) of the mounting member (3), the air guide element (38) is provided with a through hole (42), in which a fixing mandrel (43) protruding laterally from the transversal section (6) of the mounting member (3) is positively held.

12. The frontend module according to Claim 10 or 11, **characterized in that** on a side facing away from the transversal section (6) of the mounting member (3), the air guide element (38) abuts the surface of the upper narrow side (39) of the heat exchanger (14) of the cooling module (5) by its lower narrow side (44).

13. The frontend module according to any one of Claims 1 to 12, **characterized in that** the air guide element (18,18', 30, 38) is in the form of a baffle.

14. The frontend module according to any one of Claims 1 to 13, **characterized in that** the foamed material is a plastic material.

15. The frontend module according to any one of Claims 1 to 14, **characterized in that** the foamed material is an EPP or PU plastic.

## Revendications

1. Module frontal pour véhicule automobile, avec un support de montage (3) qui présente plusieurs sections s'étendant dans différentes directions pour recevoir des composants du véhicule automobile, sachant que, dans une région centrale du support de montage (3), un composant, réalisé sous la forme d'un module réfrigérant (5), est relié audit support de montage (3) avec des moyens de fixation, qu'une unité de guidage d'air (17) qui présente une pluralité d'éléments de guidage d'air (18, 18', 30, 38) de conception flexible, consistant en un premier matériau moussé formant noyau et un deuxième matériau moussé superficiel, se raccorde au support de montage.

2. Module frontal selon la revendication 1, **caractérisé en ce que** plusieurs éléments de guidage d'air (18, 18', 30, 38) sont disposés de telle manière qu'un canal de guidage d'air (K) se trouve formé entre les entrées d'air (11, 12), côté avant du véhicule, et le module réfrigérant (5), monté en aval dans la direction de déplacement (F).

3. Module frontal selon revendication 1 ou 2, **caractérisé en ce que** l'unité de guidage d'air (17) est formée par plusieurs éléments de guidage d'air (18, 18', 30, 38) qui, entourant, en forme de cadre, le module réfrigérant (5), mon reliés chacun au support de montage (3) par engagement géométrique.

4. Module frontal selon l'une des revendications 1 à 3, **caractérisé en ce que** l'unité de guidage d'air (17) présente au moins un élément de guidage d'air (18, 18', 30, 38) latéral qui s'étend au moins dans la région d'un bord vertical (19) du module réfrigérant (5), entre un plan de projection du support de montage (3) et / ou du module réfrigérant (5), d'une part, et une direction de déplacement (F) de la peau extérieure du véhicule, en aval, d'autre part.

5. Module frontal selon l'une des revendications 1 à 4, **caractérisé en ce que** l'élément de guidage d'air (18, 18', 30, 38) latéral s'étend dans la direction verticale et est maintenu par engagement géométrique ou bout-à-bout, d'une part, au support de montage (3) avec un côté étroit arrière (26) et, d'autre part, à un revêtement de pare-chocs (9) de l'unité pare-chocs (4) avec un côté étroit avant (21).

6. Module frontal selon l'une des revendications 1 à 5, **caractérisé en ce que** le côté étroit avant (21) de l'élément de guidage d'air (18, 18', 30, 38) latéral est adapté au contour vertical de l'unité pare-chocs (4) et que l'élément de guidage d'air (18, 18', 30, 38) latéral présente un évidement (22) dans la région d'un support transversal de flexion (8) de l'unité pare-chocs (4).

7. Module frontal selon l'une des revendications 1 à 6, **caractérisé en ce que** l'élément de guidage d'air latéral (30) est formé d'une pièce.

8. Module frontal selon l'une des revendications 1 à 6, **caractérisé en ce que** l'élément de guidage d'air latéral (18, 18') est segmenté, sachant qu'un segment de guidage d'air arrière (24) est relié par engagement géométrique au support de montage (3) et qu'un segment de guidage d'air avant (25) est relié par engagement géométrique au revêtement pare-chocs (9) de l'unité pare-chocs (4), et sachant que le segment de guidage d'air arrière (24) et le segment de guidage d'air avant (25) porte l'un contre l'autre, en se chevauchant avec leurs côtés longs (28, 28'), sur une face orientée l'une vers l'autre.

9. Module frontal selon l'une des revendications 1 à 8, **caractérisé en ce que** L'élément de guidage d'air (18, 18', 30) est relié au revêtement pare-chocs (9) et / ou au support de montage (3) par liaison rainure-languette.

10. Module frontal selon l'une des revendications 1 à 9, **caractérisé en ce que** l'unité de guidage d'air (17) comprend un élément de guidage d'air (38) qui s'étend entre une section transversale (6) du support de montage (3) et une face supérieure (39) d'un caloporteur (14) du module réfrigérant (5).

11. Module frontal selon la revendication 10, **caractérisé en ce que** l'élément de guidage d'air (38) présente, sur une face opposée à la section transversale (6) du support de montage (3), une ouverture de passage (42), dans laquelle est maintenu, par engagement géométrique, un ergot de fixation (43) qui fait saillie latéralement par rapport à la section transversale (6) du support de montage (3).

12. Module frontal selon la revendication 10 ou 11, **caractérisé en ce que** l'élément de guidage d'air (38) porte en nappe contre le côté étroit supérieur (39), du caloporteur (14) du module réfrigérant (5) sur une face opposée à la section transversale (6) du support de montage (3), avec un côté étroit inférieur (44).

13. Module frontal selon l'une des revendications 1 à 12, **caractérisé en ce que** l'élément de guidage d'air (18, 18', 30, 38) est réalisé en forme de plaque de guidage d'air.

14. Module frontal selon l'une des revendications 1 à 13, **caractérisé en ce que** le matériau moussé est un matériau synthétique.

15. Module frontal selon l'une des revendications 1 à 14, **caractérisé en ce que** le matériau moussé est un matériau synthétique EPP ou un matériau synthétique PU.
